# EUROPÄISCHE PATENTSCHRIFT

(11) **EP 1 277 261 B1**
(45) Veröffentlichungstag und Bekanntmachung des Hinweises auf die Patenterteilung: **03.03.2004**
(21) Anmeldenummer: 01925575.1
(22) Anmeldetag: 27.04.2001
(51) Int. Cl.: H02G 3/04

(54) **WÄRMESCHUTZVORRICHTUNG, INSBESONDERE FÜR LANGGESTRECKTE KÖRPER**
THERMAL INSULATION DEVICE, IN PARTICULAR FOR ELONGATED BODIES
DISPOSITIF CALORIFUGE, NOTAMMENT POUR DES CORPS ALLONGES

(30) Priorität: 27.04.2000 DE 20007644 U; 17.07.2000 DE 20012388 U
(43) Veröffentlichungstag der Anmeldung: 22.01.2003
(73) Patentinhaber: Verta AG, 9004 St. Gallen (CH)
(72) Erfinder: LINDNER, Michael, 83026 Rosenheim (DE)
(74) Vertreter: Patentanwälte Dr. Solf & Zapf
(86) Internationale Anmeldenummer: PCT/EP2001/004791
(87) Internationale Veröffentlichungsnummer: WO 2001/084685

(56) Entgegenhaltungen:
- WO-A-99/04194
- DE-A- 19 800 167
- GB-A- 2 184 512

## Beschreibung

Die Erfindung betrifft eine insbesondere abrieb- und scheuerfeste Wärmeschutzvorrichtung, insbesondere zur Ummantelung von langgestreckten Körpern in der Nähe von Wärmequellen, z.B. in Kraftfahrzeugen.

Üblicherweise sind beispielsweise im Kraftwagenbau längliche bzw. langgestreckte Körper, z.B. Fluidleitungen, wie Hydraulikoder Pneumatikleitungen bzw. Pneumatikschläuche, oder elektrische Kabelbäume zum Schutz vor mechanischen Einflüssen, insbesondere zum Schutz vor Wärme und Abrieb und gegen Scheuern z.B. mit Kunststoffwellrohren ummantelt.

Insbesondere bei Kabelbäumen bestehend aus einem Bündel von einzelnen Leiterdrähten, wird durch die Verwendung von Wellrohren auch eine Gruppierung der Leiterdrähte zu einem Kabelbaum erreicht. Übliche Wellrohre bestehen aus Polypropylen oder Polyamid und weisen eine nur begrenzte thermische Belastbarkeit auf, so daß elektrische Leitungen, Schläuche oder dergleichen, welche beispielsweise in Fahrzeugen in der Nähe von Wärmequellen, z.B. in der Nähe des Motors, eines Turboladers, einer Abgasanlage oder dergleichen verlegt sind, durch solche Wellrohre nicht ausreichend vor beschädigender Wärme geschützt sind.

Zur Lösung dieses Problems ist es bekannt, hochtemperaturfeste Wellrohre z.B. aus Teflon zu verwenden oder die Isolierungen der Leiterdrähte hochtemperaturfest, z.B. aus einem Silikon- oder Teflonmaterial auszubilden. Derartige hochtemperaturfeste Kabelisolierungen sind sehr teuer.

Weiterhin ist es bekannt, Wellrohre aus Polytetraflourethen in hitzebeaufschlagten Bereichen um Kabelbäume herum anzuordnen. Hier ist jedoch von Nachteil, daß eine Dauertemperaturbeständigkeit dieser Polytetraflourethen-Wellrohre nur bis ca. 260° gewährleistet ist, wobei der Schmelzpunkt bei 310° C liegt, so daß Stauwärme, die oft über 350°, insbesondere bei 370°, nicht verkraftet wird.

Es sind Glasseidenschläuche bekannt, die außenseitig beispielsweise mit einer Silikonschicht umspritzt sind. Ein derartiger zweischichtiger Aufbau aus einer Glasseidenlage und einer außenseitig aufgebrachten Silikonschicht ist zum Schutz gegen elektrischen Durchschlag, also zur Optimierung elektrischer Isolationseigenschaften bekannt. Eine derartig beschichtete Schutzvorrichtung ist auch in einem Temperaturbereich bis ca. 250° C kurzzeitig mechanisch widerstandsfähig. In Temperaturbereichen über 250° C wird die Silikonschicht beschädigt, so daß deren mechanische und thermische Schutzwirkung verloren geht.

Eine derartige Wärmeschutzvorrichtung ist aus den Druckschriften GB-A-2 184 512, DE-A-198 00 167 und WO-A-9904 194 bekannt.

Aufgabe der Erfindung ist es, eine Wärmeschutzvorrichtung für Körper, insbesondere längliche Körper wie z.B. Kabelbäume oder Fluidleitungen zu schaffen, welche einer hohen insbesondere auch zonalen Wärmebelastung langfristig standhält und verhindert, daß die Wärme schädigend auf den geschützten Körper einwirken kann.

Insbesondere soll die Wärmeschutzvorrichtung auch unempfindlich gegen mechanische Beanspruchungen, wie insbesondere Scheuern und Abrieb sein. Die Wärmeschutzvorrichtung soll außerdem flexibel einfach aufgebaut und kostengünstig herstellbar sein.

Diese Aufgabe wird mit einer Wärmeschutzvorrichtung mit den Merkmalen des Anspruchs 1 gelöst. Vorteilhafte Ausführungsformen der Erfindung sind in den Unteransprüchen gekennzeichnet.

Im folgenden wird die Erfindung anhand der Zeichnung beispielhaft näher erläutert. Es zeigen:
- Fig. 1: eine erfindungsgemäße Wärmeschutzvorrichtung in Schlauchform in einer schematischen Darstellung des Schichtaufbaus;
- Fig. 2: eine weitere Ausführungsform der erfindungsgemäßen Wärmeschutzvorrichtung in Schlauchform in einer schematischen Darstellung des Schichtaufbaus;
- Fig. 3: eine Metalldrahtgestrickschutzschicht der Wärmeschutzvorrichtung gemäß Fig. 2 in einer Ausführungsform als Einfadengestrick;
- Fig. 4: eine Metalldrahtgestrickschutzschicht der Wärmeschutzvorrichtung gemäß Fig. 2 in einer Ausführungsform als Zweifadengestrick;

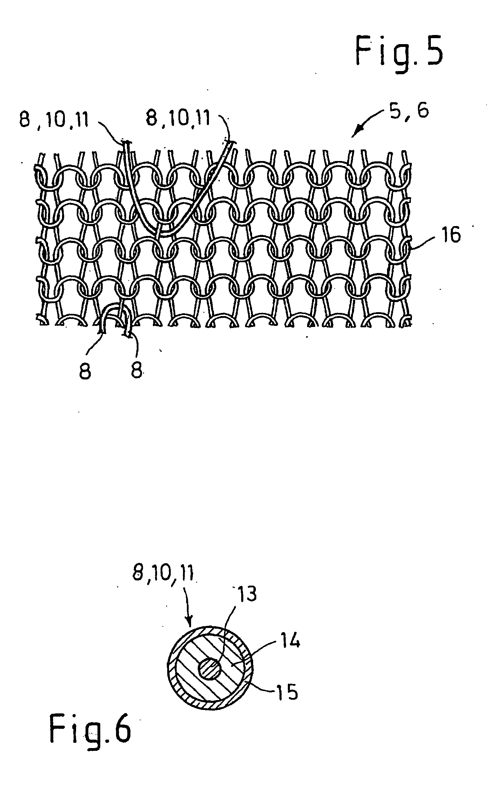

- Fig. 5: eine Metalldrahtgestrickschutzschicht der Wärmeschutzvorrichtung gemäß Figur 1 in einer Ausführungsform als doppeldrähtiges Gestrick;
- Fig. 6: einen Querschnitt durch eine geeignete Ausführungsform eines Metalldrahtes zur Ausbildung einer Metalldrahtgestrickschutzschicht;
- Fig. 7: schematisch eine weitere Ausführungsform einer erfindungsgemäßen Schutzvorrichtung.

Eine abgebildete erfindungsgemäße flexible, schlauchförmige Wärmeschutzvorrichtung 1, im folgenden auch Schutzvorrichtung genannt, zur Ummantelung von beispielsweise in einem Wellrohr 2 oder als Kabelbaum verlegten elektrischen Leiterdrähten 3 weist eine zu den zu ummantelnden Leiterdrähten 3 weisende erste innere wärmebeständige Schutzschicht 4, eine zweite, die innere Schutzschicht 4 umgebende wärmeableitende Schutzschicht 5 und vorzugsweise eine äußere, die Wärmeableitschicht 5 umgebende dritte Schutzschicht 6, welche als ebenfalls wärmeableitende und mechanisch widerstandsfähige Schutzschicht ausgebildet ist, auf.

Die erste innere wärmebeständige Schutzschicht 4 ist vorzugsweise als geflochtener oder geklöppelter Schlauchkörper ausgebildet, wobei die Flechtstränge aus Glasfilamenten bestehenden Fäden ausgebildet sind. Vorzugsweise ist die erste innere Schutzschicht 4 als geflochtener Glasseidenschlauch ausgebildet, wobei die Filamente aus einem E-Glas, einem D-Glas, einem R-Glas oder einem AR-Glas, bevorzugt aus einem E-Glas mit einer Dichte ρ ≈ 2,6 g/cm³ hergestellt sind. Die Glasfilamente haben ihren Erweichungspunkt im Bereich zwischen etwa 770° C und 990° C, insbesondere bei ca. 845° C (E-Glas). Derartige Glasfilamente haben eine Wärmebständigkeit bei im wesentlichen unveränderten Eigenschaften bis ca. 400° C (für E-Glas) bzw. 700° C (für R-Glas) sowie 1100° C (AR-Glas).

Die Glasfilamente haben eine relativ niedrige Wärmeleitfähigkeit λ, die etwa 0,8 bis 1,2 W/mK, insbesondere 1,0 W/mK beträgt. Die Glasfilamente haben eine Zugfestigkeit von ca. 2500 MPa, insbesondere bis zu 3400 MPa (E-Glas). Glasseidenschläuche aus den genannten Glasfilamenten sind außerdem feuerbeständig und nicht brennbar. Die erste innere, wärmebeständige Schutzschicht 4 ist außerdem vorteilhafterweise' imprägniert oder gelackt, damit zwischen den Filamenten bzw. den Fäden ein mechanischer Verbund ausgebildet ist und somit der Glasseidenschlauch eine dauerhafte, im Querschnitt rundrohrförmige selbsttragende Raumform erhält und diese bei der weiteren Be- oder Verarbeitung beibehält.

,Als Imprägnierung für den Glasseidenschlauch eignen sich Imprägnierungen auf Basis von Silikon oder Polyurethan, wobei die Silikon-Imprägnierung temperaturbeständig bis etwa 220° C und die Polyurethan-Imprägnierung temperaturbeständig bis etwa 155° C ist. Vorteilhafterweise werden die kostengünstigeren Imprägnierungen aus Polyurethan und Silikon gewählt. Die Imprägnierung bzw. Tränkung des Glasseidenschlauchmaterials mit Lack dient lediglich zur Raumformstabilisierung des Glasseidenschlauchs bis zur Montage. Nach der Montage der'ersten inneren wärmebeständigen Schutzschicht 4, d.h., des Glasseidenschlauches, z.B. auf dem Kabelbaum ist es für die Funktion als hitzebeständige Schutzschicht 4 unerheblich, ob die Imprägnierung bzw. Lacktränkung des Glasseidenschlauches erhalten bleibt oder nicht, da die Raumform durch die stützende Wirkung des Kabelbaumes erhalten bleibt. Somit dient die Imprägnierung bzw. Lacktränkung lediglich der vereinfachten Handhabbarkeit und Montage, weil zur Montage die erste innere wärmebeständige Schutzschicht 4 vorteilhafterweise selbsttragend ihre rohrförmige Raumform beibehalten sollte.

Die Imprägnierung bzw. Lacktränkung des Glasseidenschlauches erleichtert zudem die Handhabbarkeit der Glasseidenschläuche, da an einer endseitigen Schnittkante der Glässeidenschläuche die Fäden bzw. Filamente durch die Imprägnierung zusammengehalten werden und somit ein Ausfransen an den Enden des Glasseidenschlauches zuverlässig verhindert ist.

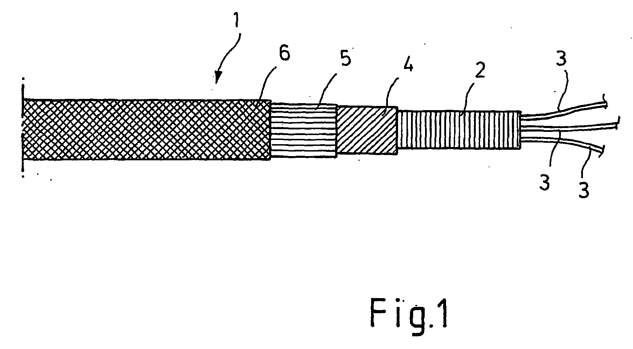

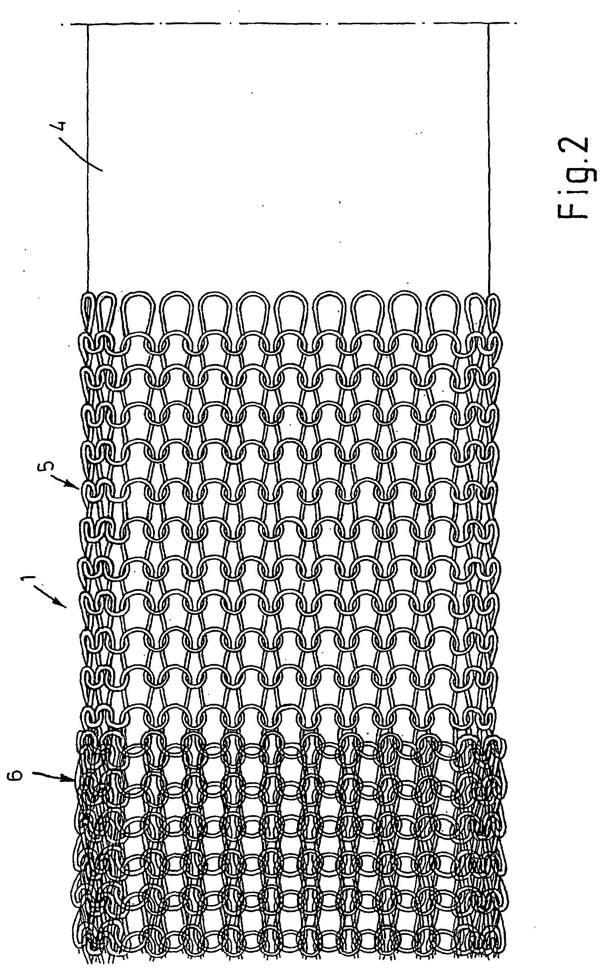

Die erste, wärmebeständige Schutzschicht 4 außenseitig, vorzugsweise anliegend umgebend, ist die zweite Schutzschicht 5, welche als Wärmeableitschicht ausgebildet ist, angeordnet (Fig. 1 bis 4). Die zweite Schutzschicht 5 besteht aus einem gut wärmeleitenden Werkstoff, insbesondere aus Metall z.B. aus einer Kupfer-Nickel-Legierung (z.B. NiCu30Fe) und ist als Metalldrahtmaschengebilde, insbesondere als textiles Maschengebilde, z.B. als Drahtgestrick oder Drahtgewirke ausgebildet.

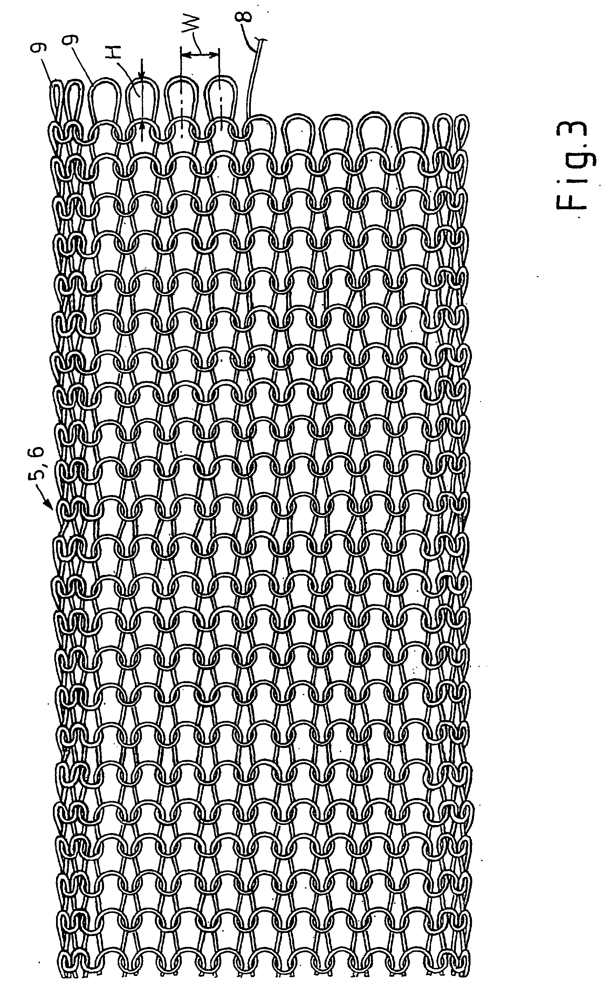

.Gemäß einer ersten Ausführungsform ist die zweite Schutzschicht 5 (Fig. 3) als eingängiges Metalldrahtgestrick aus einem Metalldraht 8 ausgebildet. Der Metalldraht 8 besteht z.B. aus einer Kupfer-Nickel-Legierung und weist einen Durchmesser von z.B. 0,114 mm auf. Der Draht 8 ist mittels eines Rundstrickverfahrens eingängig spiralförmig umlaufend verstrickt, so daß Maschen 9 ausgebildet sind. Die Maschen 9 haben eine Maschenhöhe H, auch Maschenlänge genannt, im Bereich von 0,5 bis 4 mm, insbesondere 1,0 bis 2,0 mm und weisen zueinander einen Maschenabstand W, auch Maschenteilung genannt, von beispielsweise 1 bis 4 mm, insbesondere 1,4 bis 2,5 mm auf.

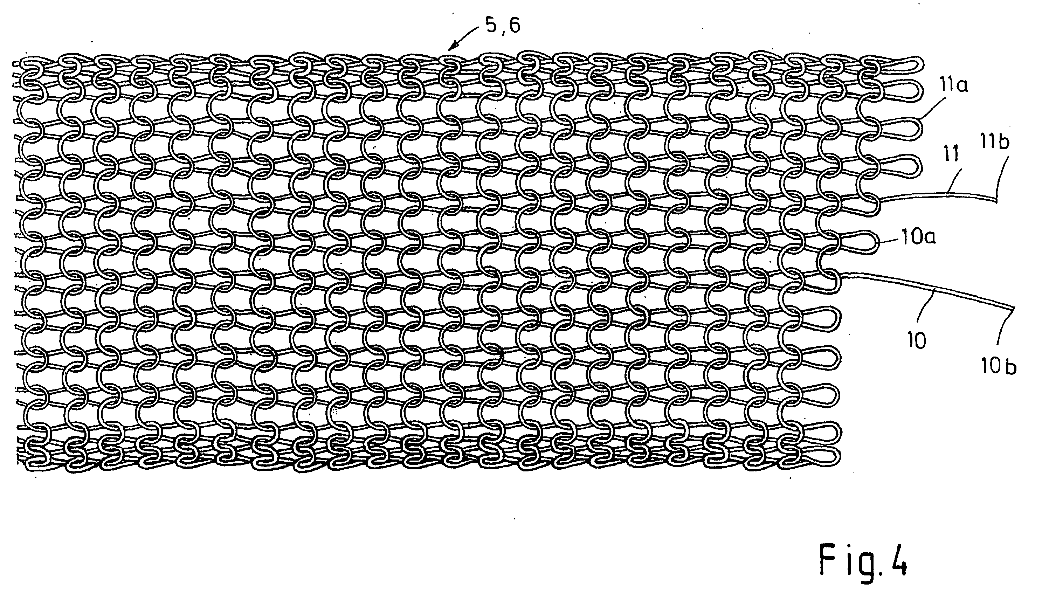

Gemäß einer weiteren Ausführungsform (Fig. 4) ist die zweite Schutzschicht 5 mittels zweier Drähte 10, 11 zweigängig spiralförmig rundgestrickt, wobei jeweils die durch den Draht 10 ausgebildeten Maschen 10a unter Bildung von freien Maschen 11a mittels des Drahtes 11 verbunden sind, wobei die freien Maschen 11a im darauffolgenden Umlauf in gleicher Weise vom Draht 10 unter Bildung freier Maschen 10a verbunden sind. Ein derartiges zweigängiges Verstricken zweier Drähte 10, 11 hat den Vorteil, daß nach dem Abschneiden eines so gestrickten Schlauchkörpers im Gegensatz zum eingängig verstrickten Schlauchkörper ein unbeabsichtigtes Auftrennen von einer End-, z.B. Schnittkante des Schlauchkörpers her verhindert ist, weil sich z.B. durch Ziehen an einem freien Drahtende 11b bzw. 10b lediglich eine über maximal einen Umfang verlaufende Maschenreihe auflösen läßt und sich danach eine Verknotung bildet, welche ein weiteres Auftrennen des Gestricks verhindert. Außerdem ist pro Flächeneinheit mehr Metalldraht zur Wärmeableitung vorhanden.

Die zweite Schutzschicht 5 anliegend umgebend ist gegebenenfalls eine dritte Schutzschicht 6, welche als mechanisch widerstandsfähige und vorzugswiese auch wärmeableitende Schutzschicht ausgebildet ist, angeordnet. Die äußerste Schutzschicht 6 ist analog zur zweiten Schutzschicht 5 als Metalldrahtmaschengebilde, insbesondere als Metalldrahtgestrick ausgebildet, wobei der das Gestrick bildende Draht 8, 10, 11 (vgl. Fig. 3) vorzugsweise aus einem Edelstahl, insbesondere enthaltend 12 % bis 18 % Chrom ausgebildet ist. Wesentlich ist, daß für das Material der äußersten Schutzschicht 6 ein Metall ausgewählt ist, welches in der elektro-chemischen Spannungsreihe nahe bei dem für die zweite Schutzschicht 5 gewählten Metall liegt, so daß unter Feuchtigkeitseinwirkung eine elektro-chemische Zersetzung der Metallgestricke vermieden ist. Die Maschenweite W und die Maschenhöhe H der Schutzschicht 6 kann gleich denen der Schutzschicht 5 sein, sie sind jedoch zweckmäßigerweise etwas größer oder kleiner, damit die Schutzschicht 6 außerhalb der Schutzschicht 5 liegt und sich die Maschen der Schichten 5, 6 möglichst nicht ineinanderlegen können. Dies gewährleistet, daß Maschen der Schutzschicht 5 nicht mit einem Scheuerpartnerteil in Berührung kommen und somit nicht zerstört werden.

Die äußerste Schutzschicht 6, welche z.B. als Edelstahlgestrick das z.B. Kupfer-Nickelgestrick der zweiten Schutzschicht 5 umgibt, ist gegenüber mechanischen Einflüssen, z.B. Scheuern wesentlich widerstandsfähiger als ein aus einem Leichtmetall, z.B. Aluminium ausgebildetes Gestrick. Weiterhin ist durch die Ummantelung der innersten Schutzschicht 4, nämlich des bevorzugten Glasseidenschlauches mittels zweier Metallgestricke ein den Glasseidenschlauch umgebendes, mindestens 2-lagiges Maschenpolster gebildet, welches im Falle einer scheuernden Belastung sowohl in Radial- als auch in Axial- und Umfangsrichtung federnd nachgeben kann und somit durch elastische Verformung der Maschen eine scheuernde Bewegung der erfindungsgemäßen Schutzvorrichtung 1 an einem benachbarten Bauteil innerhalb des Maschenpolsters abgebaut wird.

Eine erfindungsgemäße Schutzvorrichtung 1 eignet sich grundsätzlich zur direkten Ummantelung einzelner Leiterdrähte 3, wobei sich insbesondere ein Schichtaufbau aus einem Glasseidenschlauch 4, einer zweiten Schutzschicht 5 z.B. aus einem Kupfer-Nickel-Legierungsgestrick und gegebenenfalls einer äußersten Schutzschicht 6 z.B. aus einem Edelstahlgestrick bewährt hat.

Ist der zu schützende Gegenstand, z.B. das Leiterdrahtbündel aus Leiterdrähten 3 in einem Bereich verlegt, in dem eine sehr hohe, peakartige und zeitlich begrenzte Hitzebeaufschlagung vorliegt, wie z.B. in Stauhitzebereichen nach dem Abstellen eines Kraftfahrzeuges, so ist zwischen der Schutzvorrichtung 1 und dem zu schützenden Gegenstand zweckmäßigerweise ein Wellrohr 2 angeordnet, in dem die zu schützenden Leiterdrähte 3 verlegt sind. Bedingt durch die Geometrie des Wellrohrs 2 berühren lediglich die Wellenberge die innerste Schutzschicht 4 und die Wellentäler die Leiterdrähte 3, so daß der Wärmeeintrag aus der Schutzschicht 4 in das Wellrohr 2 vermindert ist. Besonders stark reduziert ist somit der Wärmeeintrag in die zu schützenden Leiterdrähte 3, weil das Wellrohr 2 als Abstandshalter zwischen den Leiterdrähten 3 und der ersten Schutzschicht 4 wirkt, wobei die in den rillenförmigen Zwischenräumen zwischen zwei Wellenbergen des Wellrohrs 2 vorhandene Luft zusätzlich wärmedämmend wirkt. Insbesondere kann durch ein Wellrohr 2 die Durchtrittszeit von auf die Schutzeinrichtung 1 einwirkender Wärme ins Innere des Wellrohres 2 erheblich verlängert werden. Bei langfristiger Wärmebeaufschlagung trägt ein Wellrohr 2 nicht wesentlich zur Temperaturabsenkung der sich langfristig einstellenden Innenraumtemperatur, welche maßgeblich ist für die thermische Belastung der Leiterdrähte 3, bei. Insofern wird in Bereichen zeitlich konstanter Wärmebeaufschlagung zumeist ohne weiteres auf den Einsatz eines Wellrohres 2 verzichtet.

Zur Erhaltung der Raumform bzw. Stabilisierung der Maschen und zur Fixierung der Drahtschlingengebilde, z.B. des Kupfer-Nickelund des Edelstahlgestricks auf dem Glasseidenschlauch 4 in Axial- und Radialrichtung der Schutzvorrichtung 1, welche zumindest bis zur Montage der Schutzvorrichtung 1 gewährleistet sein sollte, kann eine fixierende Kunststoffschicht, welche die Maschen 8, 10a, 11a der Schichten 5, 6 raumformmäßig durch Einbettung untereinander stabilisiert und auf dem Glasseidenschlauch fixiert, vorgesehen sein. Eine derartige Bindeschicht kann beispielsweise eine dünne, die Maschenschicht durchdringende Silikonimprägnierungs- oder Lackschicht sein. Ebenfalls hierzu geeignet ist eine Sprühkleberbeschichtung. Eine solche Stabilisierung und Fixierung der Schutzschichten 5, 6 auf dem Glasseidenschlauch 4 hat außerdem den Vorteil, daß beim Ablängen einer erfindungsgemäßen Schutzvorrichtung 1 sich die Strickschichten nicht verändern und insbesondere die Schnittkanten des Glasseidenschlauches 4, der Schutzschicht 5 und der Schutzschicht 6 nach dem Abschneiden miteinander fluchten, wobei sogar ein Stück Schutzschicht 5 und/oder 6 hinter der Schnittkante nach Art einer Abisolierung vom Glasseidenschlauch 4 entfernt werden kann, ohne daß das verbleibende Gestrick beeinträchtigt wird.

Im folgenden wird die wärmeabschirmende Funktion der erfindungsgemäßen Schutzvorrichtung näher erläutert.

Zonal auf die erfindungsgemäße Schutzvorrichtung 1 einwirkende Wärme, z.B. Strahlungswärme, trifft lokal in die äußerste Schutzschicht 6, beispielsweise den Edelstahlstrickschlauch, und in die wärmeleitende Schutzschicht 5 bestehend z.B. aus einem Aluminiumgestrick ein und wird von den Edelstahldrähten 8 zum Teil hin zu kühleren Bereichen des Edelstahlstrickschlauches abgeleitet und zum anderen Teil durch Wärmeleitung an die wärmeleitende Schutzschicht 5, z.B. das Kupfer-Nickel-Legierungsgestrick, abgegeben. In der wärmeleitenden Schicht 5 erfolgt ebenfalls eine schnelle Ableitung der zonal aufgebrachten Wärme in Bereiche der Schutzschicht 5, die keine derartige Wärmebelastung aufweisen. Dort wird den wärmeleitenden Schutzschichten aufgrund der geringeren Umgebungstemperatur direkt über die nach Art von "Kühlrippen" wirkenden Maschen 9, 10a, 11a Wärme entzogen, so daß im Bereich der zonalen Wärmebelastung eine Art Kühlung stattfindet. Neben der Wärmeleitung in Längsrichtung der Ummantelung findet selbstverständlich auch eine Wärmeleitung durch die Wärmeleitschicht 5 hin zur innersten Schutzschicht 4 statt. Die innerste Schutzschicht 4, im Ausführungsbeispiel der Glasseidenschlauch, ist hitzebeständig und ein schlechter Wärmeleiter, so daß die in die innerste Schutzschicht 4 eingebrachte Wärme nur zu einem sehr geringen, zumindest noch erträglichen Teil an die von der innersten Schutzschicht 4 ummantelten Teile gelangt. Somit erfolgt die Wärmeableitung hauptsächlich in Längsrichtung der Schutzvorrichtung 1 hin zu kühleren Bereichen, wo eine Wärmeabfuhr an die Umgebung stattfinden kann. Zusätzlich wärmedämmend für zu ummantelnde Leiterdrähte wirkt, wie oben bereits erwähnt, ein zwischen den Leiterdrähten 3 und der inneren Schutzschicht 4 angeordnetes Wellrohr 2, welches bedingt durch dessen wellenförmige Mantelgeometrie als Abstandshalter zwischen den zu schützenden Leiterdrähten und der innersten Schutzschicht 4 wirkt, so daß zum einen durch die sehr geringen Berührungsflächen des Wellrohres 2 sowohl mit der innersten Schutzschicht 4 als auch mit den Leiterdrähten 3 als auch durch die zwischen Wellenbergen vorhandenen Luftpolster der Wärmeübergang von der erwärmten innersten Schutzschicht 4 hin zu den zu schützenden Leiterdrähten 3 nochmals verringert ist.

Mit der erfindungsgemäßen Schutzummantelung 1 zumindest bestehend aus der innersten Schutzschicht 4 und der Wärmeableitschicht 5 sowie gegebenenfalls der äußersten Schutzschicht 6 ist es in besonders kostengünstiger und platzsparender Art und Weise möglich, beispielsweise Leiterdrähte, welche thermisch und mechanisch, insbesondere in scheuernd hochbelasteten Bereichen eines Kraftfahrzeuges zu verlegen sind, vor diesen Einflüssen zuverlässig und wirkungsvoll zu schützen. Außerdem weist eine erfindungsgemäße Schutzvorrichtung eine sehr geringe Wandstärke auf und ist aufgrund der Ausbildung der Schutzschichten 5, 6 als Metalldrahtgebilde sehr leicht und in einem weiten Bereich ausreichend biegbar bzw. flexibel.

Selbstverständlich liegt es auch im Bereich der Erfindung, den vorbeschriebenen Grundaufbau einer erfindungsgemäßen Schutzvorrichtung 1 aus einer inneren wärmebeständigen Schutzschicht 4, einer wärmeleitenden zweiten Schutzschicht 5 und gegebenenfalls einer mechanisch widerstandsfähigen wärmeableitenden Schutzschicht 6 mehrfach aufeinanderfolgend auszubilden, so daß eine erhöhte Wärmeabschirmung erreichbar ist. Es hat sich gezeigt, daß ein mehrfaches Wiederholen des erfindungsgemäßen, insbesondere wärmeableitenden Schichtaufbaus die sich im Innenraum der Schutzvorrichtung 1 einstellende Temperatur mit zunehmender Anzahl der Wiederholungen immer weniger abzusenken vermag, so daß wohl in den meisten Fällen ein höchstens dreifache Wiederholung des vorbeschriebenen Schichtaufbaus aus den Schichten 4, 5, 6 wirtschaftlich sinnvoll ist.

Besonders vorteilhaft ist es, die Schutzschicht 5 und/oder 6 zumindest zweigängig aus zumindest zwei Drähten zu stricken, da wie vorbeschrieben, ein Auftrennen eines solchen Gestrickes erschwert ist und zudem durch ein Ziehen an einem der Drähte 10, 11 nach der Ausbildung einer Verknotung ein Einschnüren des Gestrickschlauchendes bewirkt werden kann, so daß in einfacher Art und Weise eine axiale Fixierung der Schichten 5, 6 auf dem Glasseidenschlauch 4 erreichbar ist.

Erfindungsgemäß kann die Schutzschicht 5 und/oder 6 auch als Gewirke, Geflecht, Gewebe oder dergleichen Metalldrahtgebilde ausgebildet sein, wobei die äußerste Schutzschicht 6 zweckmäßigerweise freie Durchgänge, wie z.B. Maschen oder Flechtstrangzwischenräume aufweist, damit z.B. Strahlungswärme möglichst ungehindert auf die darunterliegende Wärmeableitschicht 5 auftreffen kann.

Eine weitere erfindungsgemäße Schutzvorrichtung 1 weist als innere Schutzschicht 4 analog zu den vorbeschriebenen Schutzschichten 4, beispielsweise ebenfalls einen Glasseidenschlauch auf, welcher von zumindest einer den Glasseidenschlauch umgebenden weiteren Schutzschicht 5 oder 6 aus einem Metalldrahtmaschengebilde umgeben ist, wobei der Metalldraht 8,10,11 einen im Querschnitt konzentrisch schichtartigen Aufbau aufweist. Insbesondere ist der Metalldraht 8,10,11 gemäß der DIN 17743 aus einem NiCu30Fe (Monel) ausgebildet. Derartige Metalldrähte 8,10,11 finden bestimmungsgemäß in der Elektrotechnik, dort insbesondere zur Lösung von Problemstellungen auf dem Gebiet der elektrischen bzw. elektromagnetischen Abschirmung Anwendung (sogenannte EMV-Anwendungen, EMV = elektromagnetische Verträglichkeit).

Der ausgewählte Werkstoff besitzt eine hohe Wärmeleitfähigkeit aufgrund des hohen Kupferanteils und ist zudem besonders korrosionsbeständig, insbesondere auch gegen Salzwasser.

Bevorzugt weist der Draht 8,10,11 einen Durchmesser von ca. 0,114 mm auf, wobei in Abhängigkeit des Anwendungsfalles Metalldrähte 8,10,11 mit einem Durchmesser von 0,05 bis 0,60 mm sowie Metalldrähte 8,10,11 mit rundem, flachem oder beliebigem Querschnitt anwendbar sind.

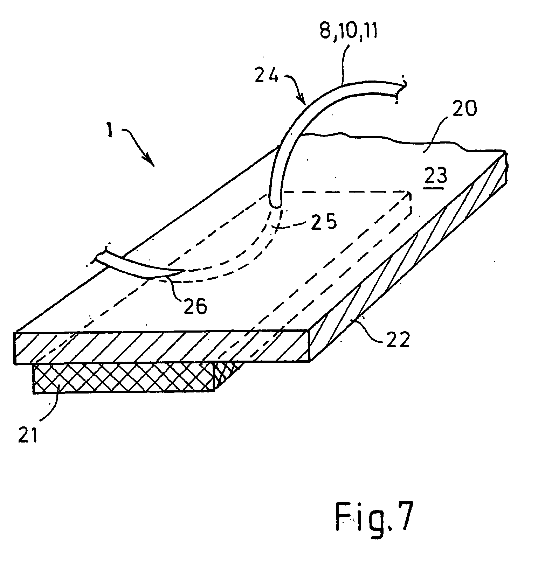

Neben den oben genannten Verstrickungsarten (einfädig eingängig; zweifädig zweigängig) ist es weiterhin vorteilhaft, das Metalldrahtgebilde 24 (Fig. 7) doppelfädig eingängig oder doppelfädig zweigängig verstrickt auszubilden, d.h. das Gestrick ist aus einem Metalldrahtstrang 16 bestehend aus vorzugsweise zwei im wesentlichen nebeneinander laufenden Metalldrähten 8,10,11 eingängig oder zweigängig gestrickt.

Dies ist vorteilhaft, weil bei annähernd gleicher Maschenanzahl pro Fläche die zur Wärmeableitung zur Verfügung stehende Metallmasse entsprechend vergrößert ist.

Weiterhin kann das Gestrick als glattes Gestrick oder als Gestrick mit Schräg- oder Pfeilwellung ausgebildet sein.

Es hat sich gezeigt, daß die durch die Schutzvorrichtung 1 abbaubare Temperaturdifferenz zwischen dem Umgebungsbereich und dem Inneren der Schutzvorrichtung 1 maximiert werden kann, wenn die Bestrickung möglichst engmaschig erfolgt, wobei unter möglichst engmaschig zu verstehen ist, daß der Metalldraht 8,10,11 in Abhängigkeit seines Durchmessers und der gewählten Bestrikkungsart (einfädig ein- oder zweigängig; mehrfädig eingängig oder mehrgängig) mit möglichst kleiner Maschenhöhe H und/oder Maschenweite W verstrickt ist.

Vorteilhaft hierbei ist, daß ein derartig engmaschiges Gestrick bereits ohne zusätzlicher Fixierung am Glasseidenschlauch einen relativ festen Sitz in axialer Richtung gewährleistet.

Eine engmaschige Bestrickung weist bei einem Drahtdurchmesser von z.B. 0,114 mm beispielsweise eine Maschenhöhe H von etwa 1 bis 2 mm und/oder eine Maschenweite W von etwa 1 bis 2 mm auf.

Zur Fixierung des/der Metalldrahtgebilde auf der inneren Schutzschicht 4 können vollflächige Tauchbadfixierungen z.B. mit Silikon verwendet oder lediglich die Enden der Schutzvorrichtung 1, beispielsweise in ein Silikon- oder Kautschukbad oder dergleichen geeignete Bäder getaucht werden, so daß die Metalldrahtgebilde einerseits endseitig stabilisiert und fixiert und andererseits deren abstehende Drahtenden zur Verminderung der Verletzungsgefahr eingebettet sind.

Überraschenderweise hat sich gezeigt, daß die durch die Schutzvorrichtung 1 ableitbare Wärmemenge mit einer oder mehreren Schutzschicht(en) 5, 6 aus einem oder mehreren Drähten 8,10,11 mit Schichtaufbau annähernd der entspricht, die mit einem Aufbau aus einer wärmeableitenden Schutzschicht 5 und einer mechanisch widerstandsfähigen wärmeableitenden Schutzschicht 6 entspricht oder diese sogar übertrifft. Außerdem ist vorteilhaft, daß eine Schutzvorrichtung 1 mit einem Schichten 13,14,15 aufweisenden Metalldraht 8,10,11 besonders für den Einsatz in korrosiver Umgebung, z.B. in salzwasserhaltiger Umgebung, geeignet ist, weil die Bildung eines galvanischen Elements und somit eine Kontaktkorrosion aufgrund der Berührung zweier Werkstoffe unterschiedlichen elektrochemischen Potentials ausgeschlossen ist.

Eine weitere Ausführungsform der erfindungsgemäßen Schutzvorrichtung 1 (Figur 7) weist eine Kunststoffschicht 20 mit einer zum zu schützenden Körper 21 weisenden Unterseite 22 und einer vom zu schützenden Körper 21 wegweisenden Oberseite 23 und ein Metalldrahtmaschengebilde 24 auf, wobei Drahtabschnitte 25 der das Metalldrahtmaschengebilde 24 ausbildenden Drähte 8,10,11 zumindest teilbereichsweise in einem dem zu schützenden Körper 21 abgewandten Bereich der Kunststoffschicht 20, insbesondere die Oberseite 23 durchdringend, im Kunststoff der Kunststoffschicht 20 eingebettet angeordnet sind.

Die Metalldrahtmaschengebilde 24 können gegebenenfalls auch als Gewebe, Gewirke, Geflecht, vorzugsweise als Gestrick ausgebildet sein.

Die Kunststoffschicht besteht vorzugsweise aus Silicon, Polyurethan, Polyethen, Polypropen, Polyamid, Polyvinylchlorid oder dergleichen.

Gemäß einer besonderen Ausführungsform ist die Schutzvorrichtung 1 einstückig mit dem zu schützenden Körper 21 ausgebildet.

Um längliche Körper mit einer erfindungsgemäßen Schutzvorrichtung 1 zu versehen, ist es zweckmäßig, die Kunststoffschicht 20 und das Metalldrahtmaschengebilde 24 den länglichen Körper 21 .konzentrisch umgebend anzuordnen.

Gemäß einer weiteren Ausführungsform der erfindungsgemäßen Schutzvorrichtung 1 ist es z.B. bei nur durchschnittlich geringerer Wärmebeaufschlagung eines zu schützenden Leiterdrahtes vorteilhaft, die Isolierung des Leiterdrahtes, welche z.B. aus Silikon oder dergleichen wärmebeständigen Materials ausgebildet ist, direkt mit einem Metalldrahtmaschengebilde 24 einer oder mehrerer der vorgeschriebenen Ausführungsform zu umgeben. Besonders eignet sich hierfür eine direkte Umstrickung der Leiterdrahtisolierung nach einer oder mehreren der vorgenannten Ausführungsformen, wobei besonders vorteilhaft ist, bei der Herstellung eines solchen wärmegeschützten Leiterdrahtes das Metalldrahtgebilde direkt nach dem Aufbringen der Isolierung auf die noch weiche bzw. noch nicht ausgehärtete Isolierungsmasse aufzubringen, so daß z.B. die Gestrickmaschen, zumindest bereichsweise, d. h. mit einem Drahtabschnitt 25 in das Isoliermaterial eindringen können und so nach vollständiger Aushärtung der Leiterdrahtisolierung zumindest teilweise, d. h. zumindest mit einem Teilbereich 26 des Querschnittes des Drahtes 8,10,11 eingebettet und fixiert sind.

Eine derartige Erhöhung der Wärme- und/oder Abriebfestigkeit kann selbstverständlich auch für andere Körper, z.B. Rohrleitungen oder Außen- bzw. Innenflächen von sonstigen Körpern erreicht werden, in dem der Körper zunächst mit einer Halteschicht 20, insbesondere einer Kunststoffschicht 20 versehen wird und eine Schutzschicht 5, 6 aus einem Metalldrahtmaschengebilde 24 in die noch weiche Halteschicht 20 eingelegt bzw. eingestrickt wird, so daß zumindest Teilbereiche 25 der das Metalldrahtgebilde 24 bildenden Metalldrähte 8,10,11 in der Halteschicht 20 eingebettet sind.

Weiterhin liegt es selbstverständlich im Bereich der Erfindung die vorbeschriebenen Schutzvorrichtungen 1 als ebene oder sonstige flächige Vorrichtungen 1 auszubilden, z.B. als Wärme- und Abriebschutzmatten zur Anbringung an zu schützenden Gegenständen. Ebenso kann entsprechend jeder geeignete Körper durch Aufbringen einer Halte-, insbesondere einer Kunststoffhalteschicht, in die ein Metalldrahtgebilde 24 zumindest teilweise eingebettet ist, vollständig oder teilbereichsweise wärme- und/oder abriebfest ausgebildet werden.

Überraschenderweise hat sich außerdem gezeigt, daß die Schutzvorrichtung 1 gute schallabsorbierende Eigenschaften aufweist und sich insbesondere in flächiger, mattenartiger Ausführung auch als Schallabsorptionsvorrichtung eignet.

Das folgende ausgewählte Beispiel soll die Erfindung weitergehend verdeutlichen.

Als erste Schutzschicht 4 wird ein geflochtener Glasseidenschlauch 4 aus Glasseidenfäden z.B. der Stärke dtex 68 x 2 verwendet und zwar ein- bis vier-fädig; z.B. einfädig bis zu einem Schlauchinnendurchmesser von etwa 13mm; zweifädig (es liegen zwei Fäden nebeneinander) bis zu einem Schlauchinnendurchmesser von etwa 20mm; dreifädig (es liegen drei Fäden nebeneinander) bei Innendurchmessern von etwa 20 bis 25mm; vierfädig (es liegen vier Fäden nebeneinander) bei Innendurchmessern von über 25mm.

Zweckmäßigerweise sind die Maschen und/oder die Fäden durch eine entsprechende Wärmebehandlung des geflochtenen Schlauchs stellenweise oberflächig miteinander kontaktverschmolzen, so daß eine Abstützung des aus dem Geflecht bestehenden Schlauchgerüsts bewirkt wird, die eine eigenfeste runde, jedoch flexible Schlauchform gewährleistet.

Zur weitergehenden Gewährleistung der Eigensteifigkeit und Flexibilität ist das geflochtene Schlauchgerüst mit vorzugsweise Silikonkautschuk oder Polyurethan vorzugsweise nur außenseitig, z.B. durch Tränkung oder Besprühen dünn beschichtet, wobei die Beschichtung verfestigt ist und wobei vorzugsweise die Flechtstruktur außenseitig erhaben erhalten bleibt. Die Tränkung bzw. das Besprühen erfolgt z.B. mit nur einem Gramm pro Laufmeter Schlauch mit dem dünnflüssigen Beschichtungsmittel. Anschließend wird zur Verfestigung die Beschichtung wärmebehandelt.

Insbesondere bei Verwendung einer Silikonkautschukbeschichtung erhält man einen sich z.B. nach einem Plattdrücken oder Knicken nahezu elastisch rückstellenden Schlauch, der dagegen in Axialrichtung nahezu keine Dehnung zuläßt.

Für den Glasseidenschlauch werden zweckmäßigerweise in Abhängigkeit von den zu erwartenden Wärmespitzen unterschiedliche Glasfilamentsorten verwendet. Für zu erwartende Temperaturen bis etwa 400°C eignet sich für die Dauertemperaturbeständigkeit E-Glas; bis etwa 700°C R-Glas und bis etwa 1100°C Quarzglas.

Der eigenstabile flexible Schlauch der Schutzschicht 4 wird in einer Strickmaschine mit einem rundrohrartigen Gestrick aus Metalldraht zur Bildung der bei zonalen Wärmeeinflüssen Wärme ableitenden Schutzschicht 5 eng sitzend umstrickt, so daß das Rohrgestrick der Schutzschicht 5 zweckmäßigerweise kontaktierend auf der Schutzschicht 4 sitzt.

Der Metalldraht der Schutzschicht 5 besteht z.B. aus einer Kupfer-Nickel-Legierung bis zu einer Drahtdicke von 0,114mm oder aus Edelstahl bis zu einer Drahtdicke von 0,14mm.

Edelstahl- oder NiCu30Fe-Draht wird insbesondere dann verwendet, wenn der erfindungsgemäße flexible Schlauch auch Streusalzbeständig sein soll. Die Maschenweite des Gestricks sollte so eng wie möglich sein. Sie richtet sich dabei nach dem engstmöglichen Knickradius des Metalldrahtes. Vorzugsweise wird zweidrähtig sprialförmig umlaufend gestrickt.

Nach dem Umstricken sitzt das Gestrick relativ lose und verschieblich auf dem flexiblen Schlauch 4. Es wird auf dem flexiblen Schlauch 4 mit einer dünnen Silikonharzbeschichtung oder einer Silikonharz-Silikonkautschuk-Vernetzer-Beschichtung durch Einbettung stabilisiert und fixiert. Die Beschichtung erfolgt z.B. durch oberflächige Tränkung oder Besprühen, wobei die Strickstruktur erhaben erhalten bleibt. Zweckmäßigerweise erfolgt eine Tränkung mit z.B. 10g Tränkungsmittel pro Laufmeter Schlauch. Nach der Tränkung wird das Fixiermittel verfestigt, z.B. bei über 100°C getrocknet.

Vorzugsweise werden die oberflächlich radial vorstehenden Drahtbereiche der Maschen vom Beschichtungsmittel befreit, was z.B. durch ein entsprechendes Abstreifen nach der Tränkung bzw. dem Besprühen erfolgt. Durch diese Freilegung von Drahtbereichen wird der Wärmeübergang der zonal auftretenden Wärme zum Drahtgeflecht begünstigt und damit die Wärmeableitung in das Drahtgeflecht beschleunigt.

Das verfestigte Beschichtungsmittel stützt die Maschenstruktur und verankert sie auf dem flexiblen Schlauch 4, wobei dessen Flexibilität und Rückstellkräfte in ausreichendem Maße erhalten bleiben.

Zur Erhöhung der Wärmeableitung ist nach einer weiteren Ausführungsform der Erfindung vorgesehen, ein Strickmaschenbeschichtungsmittel zu verwenden, das bis zu etwa 50 Gew.-%, insbesondere 5 - 30, vorzugsweise 7 - 20 Gew.-% eines Metallpulvers, z.B. eines Aluminium- und/oder Kupferpulvers homogen verteilt enthält. Ferner kann das Strickmaschenbeschichtungsmittel zur Erhöhung der Isolationsleistung zusätzlich oder ausschließlich Microhohlkugeln aus Keramik oder den vorgenannten Glassorten enthalten.

Die Erfindung betrifft zudem eine weniger abriebfeste aber preiswertere Ausführungsform, bei der das Gestrick der Schutzschicht 5 fehlt und bei der das Fixiermittel des geflochtenen Glasseidenschlauchs bis etwa 50 Gew.-%, insbesondere 5 - 30, vorzugsweise 7 - 20 Gew.-% Metallpulver, z.B. Aluminium und/oder Kupferpulver homogen verteilt enthält, wobei das Fixiermittel vorzugsweise ein Silikonharz ist oder aus einem Silikonharz plus Silikonkautschuk plus Vernetzer besteht. Diesem Fixiermittel werden an sich bekannte Pigmentpasten, hergestellt im wesentlichen aus Aluminium- und/oder Kupferpulver, angeteigt mit aromatischen aliphatischen Kohlenwasserstoffen, verwendet. Zur weitergehenden Wärmeableitung ist diese Ausführungsform der Erfindung noch mit einem der oben beschriebenen Metalldrahtmaschengebilde ausgerüstet.

Nach einer weiteren Ausführungsform der Erfindung wird zur Gewährleistung einer hohen Abscherfestigkeit der beschriebene flexible, wärmeableitende, abriebfeste und Scheuerschutz gewährleistende Schlauch mit einem Schlauch aus Keflar (Aramid) unterlegt. Dieser Schlauch, der z.B. aus Aramidfasern geflochten oder gestrickt ist, verhindert in an sich bekannter Weise ein Durchscheren des flexiblen Schutzschlauches 1, z.B. im Fall eines Automobil-Crashs durch scherende Karosserieteile. Insofern werden insbesondere elektrische Generatorleitungen und Batterieleitungen mit der Keflarummantelung des erfindungsgemäßen flexiblen Schlauchs geschützt.

## Patentansprüche

1. Wärmeschutzvorrichtung für von außen zonal wärmebeaufschlagte langgestreckte Körper, z.B. für Leitungen in einem Kraftfahrzeug, zumindest aufweisend eine erste innere, dem Körper zugewandte wärmebeständige Schutzschicht (4) aus Glasseide sowie ein die zonal auftretende Wärme ableitendes und großflächig verteilendes, Metall aufweisendes Mittel,
**dadurch gekennzeichnet,**
**daß** das Mittel ein Metalldrahtmaschengebilde ist.

2. Wärmeschutzvorrichtung nach Anspruch 1,
**dadurch gekennzeichnet,**
**daß** das Mittel ein Metall ist.

3. Wärmeschutzvorrichtung nach Anspruch 2,
**dadurch gekennzeichnet,**
**daß** die Schutzschicht (4) aus geflochtener Glasseide mit Flechtsträngen aus Glasfilamenten ausgebildet ist.

4. Wärmeschutzvorrichtung nach einem oder mehreren der Ansprüche 1 bis 3,
**dadurch gekennzeichnet,**
**daß** die Schutzschicht (4) als flexibler, selbsttragender Schlauch ausgebildet ist.

5. Wärmeschutzvorrichtung nach einem oder mehreren der Ansprüche 3 und/oder 4,
**dadurch gekennzeichnet,**
**daß** die Glasfilamente aus E-Glas oder D-Glas oder R-Glas oder AR-Glas oder Quarzglas bestehen.

6. Wärmeschutzvorrichtung nach einem oder mehreren der Ansprüche 3 bis 5,
**dadurch gekennzeichnet,**
**daß** die Filamente stellenweise oberflächig miteinander kontaktverschmolzen sind.

7. Wärmeschutzvorrichtung nach einem oder mehreren der Ansprüche 1 bis 6,
**dadurch gekennzeichnet,**
**daß** die Schutzschicht (4) eine Dauertemperaturbeständigkeit zwischen 400 und 1.100 °C gewährleistet.

8. Wärmeschutzvorrichtung nach einem oder mehreren der Ansprüche 4 bis 7,
**dadurch gekennzeichnet,**
**daß** der die Schutzschicht (4) bildende Glasseidenschlauch aus Glasseidenfäden der Stärke dtex 68 x 2 hergestellt ist.

9. Wärmeschutzvorrichtung nach einem oder mehreren der Ansprüche 4 bis 8,
**dadurch gekennzeichnet,**
**daß** der Glasseidenschlauch ein- bis vierfädig geflochten ist.

10. Wärmeschutzvorrichtung nach einem oder mehreren der Ansprüche 4 bis 9,
**dadurch gekennzeichnet,**
**daß** das Schlauchgerüst imprägniert ist.

11. Wärmeschutzvorrichtung nach Anspruch 10,
**dadurch gekennzeichnet,**
**daß** die Imprägnierung durch Tränkung oder Besprühen mit Silikonkautschuk oder Polyurethan gebildet ist, wobei vorzugsweise die Innenfläche des Schlauchs imprägnierungsmittelfrei ist.

12. Wärmeschutzvorrichtung nach Anspruch 11,
**dadurch gekennzeichnet,**
**daß** mit einem Gramm Imprägnierungsmittel pro Laufmeter Schlauch imprägniert ist.

13. Wärmeschutzvorrichtung nach einem oder mehreren der Ansprüche 10 bis 12,
**dadurch gekennzeichnet,**
**daß** der Glasseidenschlauch elastisch rückstellend ausgebildet ist.

14. Wärmeschutzvorrichtung nach Anspruch 13,
**dadurch gekennzeichnet,**
**daß** das Drahtmaschengebilde mindestens eine Schutzschicht (5) bildet, die vorzugsweise anliegend die insbesondere schlauchförmige Schutzschicht (4) umgibt.

15. Wärmeschutzvorrichtung nach Anspruch 14,
**dadurch gekennzeichnet,**
**daß** das Metalldrahtmaschengebilde ein textiles Maschengebilde ist.

16. Wärmeschutzvorrichtung nach Anspruch 15,
**dadurch gekennzeichnet,**
**daß** das Maschengebilde ein Gestrick mit Maschen (9) ist.

17. Wärmeschutzvorrichtung nach Anspruch 16,
**dadurch gekennzeichnet,**
**daß** das Gestrick spiralförmig rund gestrickt ist.

18. Wärmeschutzvorrichtung nach Anspruch 16 und/oder 17,
**dadurch gekennzeichnet,**
**daß** das Gestrick einfädig ist.

19. Wärmeschutzvorrichtung nach Anspruch 16 und/oder 17,
**dadurch gekennzeichnet,**
**daß** das Gestrick mehrfädig ist.

20. Wärmeschutzvorrichtung nach einem oder mehreren der Ansprüche 16 bis 19,
**dadurch gekennzeichnet,**
**daß** das Gestrick eingängig ist.

21. Wärmeschutzvorrichtung nach einem oder mehreren der Ansprüche 16 bis 19,
**dadurch gekennzeichnet,**
**daß** das Gestrick mehrgängig ist.

22. Wärmeschutzvorrichtung nach einem oder mehreren der Ansprüche 1 bis 21,
**dadurch gekennzeichnet,**
**daß** mehrere aufeinandersitzende wärmeableitende Schutzschichten (5, 6) vorgesehen sind.

23. Wärmeschutzvorrichtung nach einem oder mehreren der Ansprüche 1 bis 22,
**dadurch gekennzeichnet,**
**daß** das Drahtmaschengebilde insbesondere der Schutzschicht. (5) aus einer Kupfer-Nickel-Legierung, insbesondere Ni-Cu30Fe besteht.

24. Wärmeschutzvorrichtung nach einem oder mehreren der Ansprüche 1 bis 23,
**dadurch gekennzeichnet,**
**daß** das Drahtmaschengebilde insbesondere der Schutzschicht (6) aus Edelstahl besteht.

25. Wärmeschutzvorrichtung nach einem oder mehreren der Ansprüche 1 bis 24,
**dadurch gekennzeichnet,**
**daß** die Metalldrähte einen Durchmesser von 0,05 bis 0,6 mm aufweisen.

26. Wärmeschutzvorrichtung nach einem oder mehreren der Ansprüche 1 bis 25,
**dadurch gekennzeichnet,**
**daß** das Gestrick engmaschig ausgeführt ist und vorzugsweise eine Maschenhöhe von 1 bis 5 mm und eine Maschenweite von ebenfalls 1 bis 5 mm aufweist.

27. Wärmeschutzvorrichtung nach einem oder mehreren der Ansprüche 1 bis 26,
**dadurch gekennzeichnet,**
**daß** das Drahtmaschengebilde in eine Kunststoffbeschichtung eingebettet ist, die die Maschen .(9) der.Schicht (5 und/oder 6) raumformmäßig stabilisiert und auf dem Glasseidenschlauch fixiert.

28. Wärmeschutzvorrichtung nach Anspruch 27,
**dadurch gekennzeichnet,**
**daß** das Einbettungsmittel aus Silikonharz oder Silikonharz plus Silikonkautschuk plus Vernetzer besteht.

29. Wärmeschutzvorrichtung nach Anspruch 28,
**dadurch gekennzeichnet,**
**daß** das Einbettungsmittel in einer Menge von 5 bis 20 g pro Laufmeter Schlauch, insbesondere 8-12 g pro Laufmeter vorhanden ist.

30. Wärmeschutzvorrichtung nach einem oder mehreren der Ansprüche 27 bis 29,
**dadurch gekennzeichnet,**
**daß** oberflächlich radial vorstehende Drahtbereiche der Maschen (9) vom Einbettungsmittel befreit sind.

31. Wärmeschutzvorrichtung nach einem oder mehreren der Ansprüche 27 bis 30,
**dadurch gekennzeichnet,**
**daß** das Einbettungsmittel ein Metallpulver enthält.

32. Wärmeschutzvorrichtung nach einem der vorhergehenden Ansprüche,
**dadurch gekennzeichnet,**
**daß** das Einbettungsmittel Aluminium- und/oder Kupferpulver enthält.

33. Wärmeschutzvorrichtung nach einem der vorhergehenden Ansprüche,
**dadurch gekennzeichnet,**
**daß** das Einbettungsmittel Microhohlkugeln aus Keramik und/oder Glas enthält.

34. Wärmeschutzvorrichtung nach Anspruch 31 oder 32,
**dadurch gekennzeichnet,**
**daß** das Metallpulver in Mengen bis etwa 50 Gew.-%, insbesondere von 5 bis 30, vorzugsweise von 7 bis 20 Gew.-% enthalten ist.

35. Wärmeschutzvorrichtung nach einem oder mehreren der Ansprüche 1 bis 34,
**dadurch gekennzeichnet,**
**daß** sie einen Kevlarschlauch aufweist, der zwischen dem zu schützenden Objekt und der Schutzschicht (4) angeordnet ist.

36. Wärmeschutzvorrichtung nach einem oder mehreren der Ansprüche 1 bis 35,
**dadurch gekennzeichnet,**
**daß** sie als flächiges Gebilde ausgebildet ist.

## Claims

1. Thermally protective arrangement for elongated bodies which are subjected to heat zonally from outside, e.g. for cables in a motor vehicle, at least having a first, inner heat-resistant protective layer (4) of glassfibre which is adjacent the body, and a means having metal, which means conducts away the heat occurring zonally and distributes it over a large area, **characterised in that** the means is a meshed structure of metal wire.

2. Thermally protective arrangement according to claim 1, **characterised in that** the means is a metal.

3. Thermally protective arrangement according to claim 2, **characterised in that** the protective layer (4) is formed from braided glass fibre whose braided strands are filaments of glass.

4. Thermally protective arrangement according to one or more of claims 1 to 3, **characterised in that** the protective layer (4) is in the form of a flexible, self-supporting tube.

5. Thermally protective arrangement according to either or both of claims 3 and/or 4, **characterised in that** the filaments of glass are composed of E glass or D glass or R glass or AR glass or quartz glass.

6. Thermally protective arrangement according to one or more of claims 3 to 5, **characterised in that**, at points, the filaments are melted into contact with one another at their surfaces.

7. Thermally protective arrangement according to one or more of claims 1 to 6, **characterised in that** the protective layer (4) provides resistance to sustained temperatures of between 400 and 1,100° C.

8. Thermally protective arrangement according to one or more of claims 4 to 7, **characterised in that** the glassfibre tube forming the protective layer (4) is produced from glassfibre filaments having a titre of dtex 68 x 2.

9. Thermally protective arrangement according to one or more of claims 4 to 8, **characterised in that** the glassfibre tube is braided from monofilament to four-filament constituents.

10. Thermally protective arrangement according to one or more of claims 4 to 9, **characterised in that** the tube structure is impregnated.

11. Thermally protective arrangement according to claim 10, **characterised in that** the impregnation takes the form of immersion in or soaking or spraying with silicone rubber or polyurethane, with the inner face of the tube preferably being free of impregnating medium.

12. Thermally protective arrangement according to claim 11, **characterised in that** the impregnation is performed with one gram of impregnating medium per running metre of tube.

13. Thermally protective arrangement according to one or more of claims 10 to 12, **characterised in that** the glassfibre tube is formed to have the capacity for elastic recovery.

14. Thermally protective arrangement according to claim 13, **characterised in that** the meshed structure of wire forms at least one protective layer (5) which surrounds the in particular tubular protective layer (4), preferably by resting against it.

15. Thermally protective arrangement according to claim 14, **characterised in that** meshed structure of metal wire is preferably a textile meshed structure.

16. Thermally protective arrangement according to claim 15, **characterised in that** the meshed structure is a knitted structure having meshes in the form of stitches (9).

17. Thermally protective arrangement according to claim 16, **characterised in that** the knitted structure is circular knitted in a spiral.

18. Thermally protective arrangement according to claim 16 and/or 17, **characterised in that** the knitted structure is monofilamentary.

19. Thermally protective arrangement according to claim 16 and/or 17, **characterised in that** the knitted structure is multifilamentary.

20. Thermally protective arrangement according to one or more of claims 16 to 19, **characterised in that** the knitted structure is single-start.

21. Thermally protective arrangement according to one or more of claims 16 to 19, **characterised in that** the knitted structure is multi-start.

22. Thermally protective arrangement according to one or more of claims 1 to 21, **characterised in that** a plurality of protective layers (5, 6) which conduct heat away are provided, seated one on top of the other.

23. Thermally protective arrangement according to one or more of claims 1 to 22, **characterised in that** the meshed structure of wire, and particularly the protective layer (5), is composed of a copper-nickel alloy, particularly NiCu30Fe.

24. Thermally protective arrangement according to one or more of claims 1 to 23, **characterised in that** the meshed structure of wire, and particularly the protective layer (6), is composed of stainless steel.

25. Thermally protective arrangement according to one or more of claims 1 to 24, **characterised in that** the diameter of the metal wires is from 0.05 to 6 mm.

26. Thermally protective arrangement according to one or more of claims 1 to 25, **characterised in that** the knitted structure is close-knit and preferably has a stitch height of 1 to 5 mm and a stitch width likewise of 1 to 5 mm.

27. Thermally protective arrangement according to one or more of claims 1 to 26, **characterised in that** the meshed structure of wire is embedded in a plastics coating which stabilises the meshes or stitches (9) in the layer (5 and/or 6) in their three-dimensional shape and is fixed to the tube of glassfibre.

28. Thermally protective arrangement according to claim 27, **characterised in that** the embedding medium comprises silicone resin or silicone resin plus silicone rubber plus cross-linking agent.

29. Thermally protective arrangement according to claim 28, **characterised in that** the embedding medium is present in quantities of from 5 to 20 g per running meter of tube, and in particular from 8 to 12 g per running meter.

30. Thermally protective arrangement according to one or more of claims 27 to 29, **characterised in that** regions of the wire of the meshes or stitches (9), which regions project radially at the surface, are free of embedding medium.

31. Thermally protective arrangement according to one or more of claims 27 to 30, **characterised in that** the embedding medium contains powdered metal.

32. Thermally protective arrangement according to one of the foregoing claims, **characterised in that** the embedding medium contains powdered aluminium and/or powdered copper.

33. Thermally protective arrangement according to one of the foregoing claims, **characterised in that** the embedding medium contains hollow micro-spheres of ceramic material and/or glass.

34. Thermally protective arrangement according to claim 31 or 32, **characterised in that** the powdered metal is present in quantities of up to approximately 50% by weight, and particularly 5 to 30% by weight and preferably 7 to 20% by weight.

35. Thermally protective arrangement according to one or more of claims 1 to 34, **characterised in that** it has a Kevlar tube which is arranged between the object to be protected and the protective layer (4).

36. Thermally protective arrangement according to one or more of claims 1 to 35, **characterised in that** it is in form of a planar structure.

## Revendications

1. Dispositif de protection thermique pour un corps à longue portée, chargé thermiquement dans des zones extérieures, par exemple pour des conduits de véhicules, présentant au moins une première couche de protection (4) interne orientée vers le corps, résistante à la chaleur et composée de silionne ainsi qu'un moyen présentant du métal répartissant sur des surfaces importantes et conduisant la chaleur localisée dans une zone, **caractérisé en ce que** le moyen est une entité à mailles avec des filaments métalliques.

2. Dispositif de protection thermique selon la revendication 1, **caractérisé en ce que** le moyen est un métal.

3. Dispositif de protection thermique selon la revendication 2, **caractérisé en ce que** la couche de protection (4) composée de silionne tressée est formée à l'aide de brins tressés de filaments de verre.

4. Dispositif de protection thermique selon l'une quelconque ou plusieurs des revendications 1 à 3, **caractérisé en ce que** la couche de protection (4) est formée comme une tubulure autoportante flexible.

5. Dispositif de protection thermique selon l'une quelconque ou plusieurs des revendications 3 et / ou 4, **caractérisé en ce que** les filaments de verre se composent de verre E ou de verre D ou de verre R ou de verre AR ou de verre de quartz.

6. Dispositif de protection thermique selon l'une quelconque ou plusieurs des revendications 3 à 5, **caractérisé en ce que** les filaments sont fondus les uns avec les autres par contact en surface à un point donné.

7. Dispositif de protection thermique selon l'une quelconque ou plusieurs des revendications 1 à 6, **caractérisé en ce que** la couche de protection (4) garantit une résistance longue durée à une température entre 400 et 1 100°C.

8. Dispositif de protection thermique selon l'une quelconque ou plusieurs des revendications 4 à 7, **caractérisé en ce que** le tube en silionne formant la couche de protection (4) est fabriqué à partir de fils de silionne présentant une résistance dtex de 68 x 2.

9. Dispositif de protection thermique selon l'une quelconque ou plusieurs des revendications 4 à 8, **caractérisé en ce que** la tubulure en silionne est tressée avec un à quatre fils.

10. Dispositif de protection thermique selon l'une quelconque ou plusieurs des revendications 4 à 9, **caractérisé en ce que** le support de la tubulure est imprégné.

11. Dispositif de protection thermique selon la revendication 10, **caractérisé en ce que** l'imprégnation est constituée par pénétration ou arrosage avec un caoutchouc en silicone ou du polyuréthane, la surface interne de la tubulure étant de préférence exempte de tout produit d'imprégnation.

12. Dispositif de protection thermique selon la revendication 11, **caractérisé en ce que** la tubulure est imprégnée à l'aide d'un gramme de produit d'imprégnation par mètre de course.

13. Dispositif de protection thermique selon l'une quelconque ou plusieurs des revendications 10 à 12, **caractérisé en ce que** la tubulure en silionne est formée de manière à se repositionner de façon élastique.

14. Dispositif de protection thermique selon la revendication 13, **caractérisé en ce que** l'entité en mailles filamentaires forme au moins une couche de protection (5) qui entoure, de préférence, la couche de protection (4) en forme de tubulure notamment et ce, de façon adjacente.

15. Dispositif de protection thermique selon la revendication 14, **caractérisé en ce que** l'entité de mailles de filaments métalliques est une entité en mailles textiles.

16. Dispositif de protection thermique selon la revendication 15, **caractérisé en ce que** l'entité en mailles est un tricot avec des mailles (9).

17. Dispositif de protection thermique selon la revendication 16, **caractérisé en ce que** le tricot est tricoté de façon arrondie sous forme de spirales.

18. Dispositif de protection thermique selon les revendications 16 et / ou 17, **caractérisé en ce que** le tricot est à fil unique.

19. Dispositif de protection thermique selon les revendications 16 et / ou 17, **caractérisé en ce que** le tricot comprend plusieurs fils.

20. Dispositif de protection thermique selon l'une quelconque ou plusieurs des revendications 16 à 19, **caractérisé en ce que** le tricot est à pas simple.

21. Dispositif de protection thermique selon l'une quelconque ou plusieurs des revendications 16 à 19, **caractérisé en ce que** le tricot est à pas multiples.

22. Dispositif de protection thermique selon l'une quelconque ou plusieurs des revendications 1 à 21, **caractérisé en ce que** plusieurs couches de protection (5, 6) juxtaposées agissant comme conducteurs thermiques sont prévues.

23. Dispositif de protection thermique selon l'une quelconque ou plusieurs des revendications 1 à 22, **caractérisé en ce que** l'entité à mailles filamentaires notamment de la couche de protection (5) se compose d'un alliage nickel-cuivre, notamment Ni-Cu30Fe.

24. Dispositif de protection thermique selon l'une quelconque ou plusieurs des revendications 1 à 23, **caractérisé en ce que** l'entité à mailles filamentaires notamment de la couche de protection (6) se compose d'un métal noble.

25. Dispositif de protection thermique selon l'une quelconque des revendications de 1 à 24, **caractérisé en ce que** les filaments métalliques présentent un diamètre de 0,05 à 0,6 mm.

26. Dispositif de protection thermique selon l'une quelconque ou plusieurs des revendications 1 à 25, **caractérisé en ce que** le tricot est réalisé avec des mailles étroites et de préférence avec une hauteur de mailles de 1 à 5 mm et une largeur de mailles de 1 à 5 mm également.

27. Dispositif de protection thermique selon l'une quelconque ou plusieurs des revendications 1 à 26, **caractérisé en ce que** l'entité à mailles filamentaires se trouve en retrait dans un revêtement en matière plastique, lequel revêtement stabilise la maille (9) de la couche (5 et / ou 6) en fonction de la forme de l'espace et se fixe sur la tubulure en silionne.

28. Dispositif de protection thermique selon la revendication 27, **caractérisé en ce que** le produit d'insertion se compose de résine de silicones ou de résine de silicones plus du caoutchouc de silicones plus un agent de réticulation.

29. Dispositif de protection thermique selon la revendication 28, **caractérisé en ce que** le moyen d'insertion est présent selon une quantité de 5 à 20 g par mètre de course de la tubulure, notamment de 8 à 12 g par mètre de course.

30. Dispositif de protection thermique selon l'une quelconque ou plusieurs des revendications 27 à 29, **caractérisé en ce que** les zones de filaments existant de façon radiale à la surface des mailles (9) sont exemptes de produit d'insertion.

31. Dispositif de protection thermique selon l'une quelconque ou plusieurs des revendications 27 à 30, **caractérisé en ce que** le produit d'insertion est une poudre métallique.

32. Dispositif de protection thermique selon l'une quelconque des revendications précédentes, **caractérisé en ce que** le produit d'insertion contient de la poudre d'aluminium et / ou de la poudre de cuivre.

33. Dispositif de protection thermique selon l'une quelconque des revendications précédentes, **caractérisé en ce que** le produit d'insertion contient des microbilles creuses en céramique et / ou en verre.

34. Dispositif de protection thermique selon les revendications 31 ou 32, **caractérisé en ce que** la poudre de métal est contenue selon des quantités allant jusqu'à 50 % en poids, notamment de 5 à 30, de préférence de 7 à 20 % en poids.

35. Dispositif de protection thermique selon l'une quelconque ou plusieurs des revendications 1 à 34, **caractérisé en ce qu'**il présente une tubulure en Kevlar, qui est agencée entre l'objet à protéger et la couche de protection (4).

36. Dispositif de protection thermique selon l'une quelconque où plusieurs des revendications 1 à 35, **caractérisé en ce qu'**il est formé comme une entité plate.
